# EUROPÄISCHE PATENTSCHRIFT

(11) **EP 3 330 684 B1**
(45) Veröffentlichungstag und Bekanntmachung des Hinweises auf die Patenterteilung: **14.08.2019**
(21) Anmeldenummer: 16202118.2
(22) Anmeldetag: 05.12.2016
(51) Int. Cl.: G01J 3/02, G01J 3/10, G01J 3/18, G01J 3/42, G01J 3/51, G01N 21/39, G01N 21/27, G02B 27/10, H01S 3/13

(54) **VERFAHREN ZUM SICHERSTELLEN EINES MODULATIONSBEREICHS**
METHOD FOR SECURING A MODULATION RANGE
PROCÉDÉ POUR GARANTIR UNE PLAGE DE MODULATION

(43) Veröffentlichungstag der Anmeldung: 06.06.2018
(73) Patentinhaber: SICK AG, 79183 Waldkirch/Breisgau (DE)
(72) Erfinder: EDLER, Julian, 79312 Emmendingen (DE); BEYER, Thomas, 79111 Freiburg (DE); FRANK, Samson, 79111 Freiburg (DE)
(74) Vertreter: Manitz Finsterwald Patent- und Rechtsanwaltspartnerschaft mbB

(56) Entgegenhaltungen:
- WO-A1-2010/148263
- US-A1- 2003 174 743
- US-A1- 2010 292 581
- US-A1- 2012 287 418

## Beschreibung

Die vorliegende Erfindung betrifft ein Verfahren zum Sicherstellen eines Modulationsbereichs einer wellenlängenvariablen Strahlungsquelle im Rahmen der Messung einer Absorptionslinie einer Substanz, ein Verfahren zur Messung einer Absorptionslinie einer Substanz sowie ein Spektrometer zur Messung einer Absorptionslinie einer Substanz.

Ein Verfahren nach dem Oberbegriff des Anspruchs 1 ist aus US 2010/0292581 A1 bekannt. In US 2012/0287418 A1 werden ferner die Verwendung eines Volumen-Bragg-Gitters sowie, ebenso wie in US 2003/0174743 A1, die Verwendung dichroitischer Strahlteiler als jeweilige Filter beschrieben.

Insbesondere zum Zweck der Bestimmung der Konzentration einer Substanz ist es bekannt, eine Absorptionslinie der Substanz, d.h. ein Absorptionsspektrum im Bereich einer für die Substanz charakteristischen Absorption, zu messen. Vorzugsweise ist eine solche Absorptionslinie relativ scharf, so dass auf die Substanz treffende Strahlung lediglich in einem schmalen Wellenzahlbereich von einigen wenigen Wellenzahlen pro Zentimeter, z.B. von etwa 0,5 cm⁻¹ bis etwa 2 cm⁻¹, Breite absorbiert wird und in der Umgebung außerhalb dieses Bereichs möglichst nicht absorbiert wird, wobei die Halbwertsbreite der Absorptionslinie z.B. etwa 0,2 cm⁻¹ betragen kann. Anhand der Absorptionslinie, insbesondere anhand des Verlaufs des Absorptionsspektrums bzw. anhand charakteristischer Größen dieses Verlaufs, wie etwa einer Breite, einer Tiefe und/oder einer Fläche des Verlaufs oder einer Ableitung des Verlaufs, kann dann die Konzentration der Substanz bestimmbar sein. Für eine quantitative Messung können dabei noch weitere Größen zu berücksichtigen sein, insbesondere die Länge der Messstrecke, entlang welcher die Strahlung die Substanz durchläuft, aber etwa auch der Druck und/oder die Temperatur der jeweiligen Substanz.

Die Absorption der Strahlung im Bereich einer Absorptionslinie kann im Wesentlichen auf Energieübergängen beruhen, die durch Strahlung mit einer der Energie des jeweiligen Übergangs entsprechenden Wellenlänge ausgelöst werden, wodurch diese Strahlung dann absorbiert wird. Wenn zwei oder mehrere solcher Übergänge einer jeweiligen Substanz oder auch mehrerer verschiedener Substanzen, die gemeinsam untersucht werden, bezüglich der absorbierten Wellenlängen nahe beieinander liegen, insbesondere überlappen, kann eine einzelne zu messende Absorptionslinie (im Sinne des vorliegenden Textes) auch die Absorption durch mehrere solche Energieübergänge der einen oder mehreren untersuchten Substanzen umfassen. Insofern umfasst das genannte Messen einer Absorptionslinie einer Substanz auch das Messen von gegebenenfalls überlagerten Absorptionsspektren, die auf einem oder mehreren Energieübergängen einer oder mehrerer Substanzen beruhen.

Zum Messen einer Absorptionslinie einer Substanz kann, beispielsweise mittels eines Spektrometers, Strahlung mit Wellenlängen im Bereich der Absorptionslinie erzeugt und durch die Substanz geleitet werden. Grundsätzlich könnte die Strahlung alle Wellenlängen im Bereich der Absorptionslinie oder in einem noch größeren Bereich, der die Absorptionslinie einschließt, zugleich umfassen. Dafür wäre eine breitbandige Strahlungsquelle erforderlich, die mit möglichst homogener Intensität Strahlung über den relevanten Wellenlängenbereich erzeugt. Allerdings müsste dann die Detektionsvorrichtung zum Erfassen der durch die Substanz geleiteten Strahlung dazu ausgebildet sein, die Intensität der Strahlung wellenlängenabhängig und mit hoher spektraler Auflösung zu erfassen. Eine derartige wellenlängenspezifische Detektionsvorrichtung ist vergleichsweise aufwändig. Darüber hinaus bietet insbesondere ein Laser, der lediglich schmalbandig emittiert, gegenüber einer breitbandigen Strahlungsquelle den Vorteil hoher Leistung sowie eines kollimierten Strahls, wodurch lange Strahlwege möglich sind und auch starke Intensitätsverluste (z.B. durch Staub auf der Messstrecke oder ungerichtete Reflexionen) noch akzeptabel sein können.

Alternativ kann die Absorptionslinie daher auch abgetastet werden, indem eine wellenlängenvariable Strahlungsquelle mit sehr schmaler Linienbreite, z.B. mit einer maximalen Breite von etwa 0,001 cm⁻¹, vorzugsweise von etwa 0,003 cm⁻¹, verwendet wird. Näherungsweise kann die so erzeugte Strahlung dann als Strahlung einer einzigen Wellenlänge betrachtet werden. Als wellenlängenvariable Strahlungsquelle mit schmaler Linienbreite eignet sich insbesondere ein abstimmbarer Diodenlaser.

Die wellenlängenvariable Strahlungsquelle kann dann dazu angesteuert werden, Strahlung derart auszusenden, dass die Wellenlänge der Strahlung den Wellenlängenbereich der Absorptionslinie durchläuft. Die Absorption der Strahlung durch die Substanz wird also nicht für alle Wellenlängen der Absorptionslinie gleichzeitig gemessen, sondern nacheinander. Dabei wird der Modulationsbereich, d.h. der Wellenlängenbereich den die von der wellenlängenvariablen Strahlungsquelle ausgesandte Strahlung durchlaufen soll, so gewählt, dass er die Absorptionslinie vollständig umfasst, wobei der Modulationsbereich vorzugsweise breiter als die Absorptionslinie ist, so dass auch eine Umgebung zu beiden Seiten der Absorptionslinie umfasst wird, um sicherzustellen, dass die Absorptionslinie zuverlässig identifiziert werden kann. Beispielsweise kann der Modulationsbereich zumindest doppelt so breit wie die Absorptionslinie sein, vorzugsweise ist er zumindest dreimal so breit.

Grundsätzlich kann es ausreichen, den Modulationsbereich kontinuierlich von seinem einen Ende zu seinem anderen Ende zu durchlaufen. Der Modulationsbereich kann aber auch mehrfach, sei es in dieselbe Richtung (z.B. sägezahnartig) oder mit Richtungswechsel (z.B. dreiecksartig oder sinusförmig), durchlaufen werden. Auch braucht die Geschwindigkeit des Durchlaufens nicht konstant zu sein, sondern es kann beispielsweise vorgesehen sein, einen mittleren Bereich des Modulationsbereichs, der die Absorptionslinie umfasst, langsamer zu durchlaufen als Randbereiche, etwa um die Messauflösung in diesem Bereich zu verbessern. Wenn mittels mehrerer verschiedener Strahlungsquellen mehrere Absorptionslinien zugleich gemessen werden sollen, kann auch ein zeitliches Multiplexing vorgesehen sein, so dass das Durchlaufen des Modulationsbereichs unter Umständen auch unterbrochen sein kann. Das jeweilige zeitliche Muster, gemäß welchem der Modulationsbereich durchlaufen wird, kann also sehr unterschiedlich je nach spezifischen Anforderungen gewählt werden.

Durch Berücksichtigung des jeweiligen zeitlichen Musters, gemäß welchem der Modulationsbereich durchlaufen wird, kann dann ein Spektrum der durch die Substanz geleiteten Strahlung auch mittels einer wellenlängenunspezifischen Detektionsvorrichtung ermittelt werden. Denn anhand des zeitlichen Musters kann jedem Messzeitpunkt eine jeweilige Wellenlänge zugeordnet werden, so dass eine zu einem bestimmten Zeitpunkt von der Detektionsvorrichtung erfasste Intensität der Strahlung über diesen Zusammenhang jeweils eindeutig einer Wellenlänge zugeordnet werden kann. Auf diese Weise kann ein Spektrum als wellenlängenabhängige Intensität der durch die Substanz teilweise absorbierten Strahlung ermittelt werden.

Bei einem solchen Vorgehen wird die Wellenlänge der Strahlung nicht direkt erfasst, sondern es wird über das zeitliche Muster, gemäß welchem die Strahlungsquelle zum Aussenden von Strahlung unterschiedlicher Wellenlänge angesteuert wird, auf die Wellenlänge rückgeschlossen. Daher ist es für die korrekte Zuordnung einer erfassten Intensität zu einer Wellenlänge wichtig, dass die Strahlungsquelle zu einem jeweiligen Zeitpunkt auch tatsächlich Strahlung derjenigen Wellenlänge aussendet, die von dem zeitlichen Muster für diesen Zeitpunkt vorgegeben wird.

Reale Strahlungsquellen sind in der Regel jedoch nicht dauerhaft wellenlängenstabil. Beispielsweise kann vorgesehen sein, dass der Strahlungsquelle die auszusendende Wellenlänge durch einen Steuerstrom oder eine Steuerspannung vorgegeben wird, der/die entsprechend dem zeitlichen Muster verändert wird. Allerdings kann sich der Zusammenhang zwischen der jeweiligen Stromstärke bzw. der jeweiligen Spannung und der tatsächlich ausgesandten Wellenlänge mit der Zeit verändern. Zudem wirkt sich auch die jeweils vorliegende Temperatur auf die tatsächlich ausgesandte Wellenlänge aus. Obwohl also die Strahlungsquelle dazu angesteuert wird, Strahlung derart auszusenden, dass die Wellenlänge der Strahlung den Modulationsbereich gemäß dem zeitlichen Muster durchläuft, sendet sie dann in Wirklichkeit Strahlung aus, deren Wellenlänge sich gemäß einem abweichenden Muster verändert, so dass der tatsächlich durchlaufende Modulationsbereich verfälscht, insbesondere zu größeren oder kleineren Wellenlängen gedriftet, sein kann.

Für eine zuverlässige Messung der Absorptionslinie ist es daher wichtig sicherzustellen, dass der vorgegebene Modulationsbereich auch tatsächlich durchlaufen wird. Es ist daher vorteilhaft, Maßnahmen vorzusehen, mittels welcher die Wellenlänge der ausgesandten Strahlung überprüft und die Strahlungsquelle oder deren Ansteuerung erforderlichenfalls angepasst wird. Derartige Maßnahmen werden auch als "Line-Locking" bezeichnet.

Beispielsweise kann eine Strahlungsquelle dadurch auf Abweichungen der tatsächlich ausgesandten Wellenlängen von den Wellenlängen, zu deren Aussendung die Strahlungsquelle angesteuert wird, überprüft werden, dass die von der Strahlungsquelle ausgesandte Strahlung durch eine Referenzküvette mit einer Prüfsubstanz geleitet wird, die eine Absorption bei einer bekannten Wellenlänge innerhalb des Modulationsbereichs, insbesondere in der Nähe der zu messenden Absorptionslinie, aufweist und vorzugsweise in vergleichsweise hoher Konzentration vorliegt. Auf diese Weise kann im Wesentlichen entsprechend zu der Messung der eigentlich zu messenden Substanz eine Messung der Prüfsubstanz durchgeführt werden, durch welche die Position der Absorption der Prüfsubstanz ermittelt werden kann. Weicht diese ermittelte Position von der zu erwartenden bekannten Position der Absorption der Prüfsubstanz ab, kann daran erkannt werden, dass auch die Messung der eigentlich zu messenden Substanz fehlerbehaftet ist.

Die Verwendung von Referenzküvetten kann jedoch insofern nachteilig sein, als diese ihrerseits fehleranfällig sein können. Insbesondere wenn es sich bei der in der Referenzküvette enthaltenen Prüfsubstanz um ein Prüfgas handelt, kann die Referenzküvette auf Dauer unter Umständen nicht ausreichend dicht sein. Zudem kann es zu Kondensation und Tropfenbildung kommen, welche die Messung beeinträchtigen können. Des Weiteren kann die jeweilige Prüfsubstanz Alterungseffekte zeigen, welche die Absorption beeinflussen können. Schließlich ist zu berücksichtigen, dass es zu Oberflächenabsorption an der Referenzküvette selbst kommen kann, welche die Messung verfälschen kann.

Darüber hinaus können sich Schwierigkeiten ergeben, wenn mehrere Strahlungsquellen mit verschiedenen Wellenlängen bzw. Wellenlängenbereichen zur gleichzeitigen Messung verschiedener Substanzen genutzt werden. Bei einem solchen System, insbesondere bei einem Spektrometer, das insofern modular ausgebildet ist, als verschiedene Strahlungsquellen wahlweise daran angeordnet werden können, kann vorgesehen sein, dass die Strahlengänge für die jeweilige Strahlung der Strahlungsquellen zu einem einzelnen Messstrahl räumlich zusammengeführt werden, damit die Strahlung der verschiedenen Strahlungsquellen eine Messstrecke mit den zu messenden Substanzen gemeinsam als ein einzelner Messstrahl durchläuft. Anschließend kann der Messstrahl dann wieder aufgeteilt und über verschiedene Strahlengänge zu verschiedenen Detektionsvorrichtungen geleitet werden, um die Absorption durch die Substanzen und letztlich deren jeweilige Konzentration zu bestimmen. Dabei braucht der Messstrahl nicht zwangsläufig in dieselben Strahlen aufgeteilt zu werden, aus denen er zuvor gebildet wurde. Sondern es kann auch vorgesehen sein, dass die Strahlung verschiedener Strahlungsquellen zu derselben Detektionsvorrichtung geleitet wird, wobei dann durch Multiplexing oder anhand unterschiedlicher Modulationsfrequenzen der Strahlung zwischen den verschiedenen Strahlungsquellen unterschieden werden kann.

Wenn mehrere Strahlungsquellen in einer solchen oder einer vergleichbaren Weise genutzt werden, kann es erforderlich sein, für mehrere, insbesondere für jede, der Strahlungsquellen jeweils gesondert sicherzustellen, dass die tatsächlich ausgesandte Wellenlänge der vorgegebenen Wellenlänge entspricht, insbesondere dass der jeweilige Modulationsbereich, den die ausgesandte Strahlung durchläuft, nicht von dem zu durchlaufenden Modulationsbereich abweicht.

Grundsätzlich können zu diesem Zweck ebenso viele Referenzküvetten vorgesehen werden, wie Strahlungsquellen für die jeweilige Messung verwendet werden. Jede Referenzküvette kann dann eine für das Überprüfen des Modulationsbereichs einer jeweils anderen Strahlungsquelle geeignete Prüfsubstanz aufweisen. Durch die Vielzahl der Referenzküvetten ergibt sich aber ein erhöhter Herstellungs- und Wartungsaufwand. Zudem ist nicht unproblematisch, wo die Referenzküvetten vorgesehen werden können, insbesondere wenn das Spektrometer modular ausgebildet sein soll, so dass je nach Anwendung unterschiedliche Strahlungsquellen mit jeweils unterschiedlichen Wellenlängenbereichen an dem Spektrometer verwendet werden können.

Beispielsweise kann vorgesehen werden, dass der Messstrahl, zu dem die Strahlung aller jeweiligen Strahlungsquellen kombiniert wird, durch eine oder mehrere Referenzküvetten geleitet wird. Zu diesem Zweck kann insbesondere ein Teil des Messstrahls als eine Art Line-Locking-Kanal abgezweigt werden, so dass etwa ein gesondertes Line-Locking-Modul zur modularen Verwendung an dem jeweiligen Spektrometer vorgesehen werden kann.

Wenn dabei eine einzige Referenzküvette verwendet wird, muss diese für jeden Wellenlängenbereich der jeweiligen Strahlungsquellen jeweils eine Prüfsubstanz enthalten. Das kann aber bei einem modularen Aufbau des Spektrometers problematisch sein. Denn bei Hinzufügung oder Austausch einer Strahlungsquelle kann es erforderlich werden, einen anderen Satz von Prüfsubstanzen vorzusehen, was dann jeweils einen Austausch der gesamten Referenzküvette erforderlich machen würde. Zudem müssten Referenzküvetten für eine Vielzahl verschiedener Kombinationen von Strahlungsquellen bereitgehalten werden.

Alternativ zur Verwendung einer einzelnen Referenzküvette können daher auch mehrere Referenzküvetten in Serie in dem Line-Locking-Kanal vorgesehen werden, die eine jeweils andere Prüfsubstanz enthalten. Bei einer solchen Ausbildung können die jeweils zu verwendenden Referenzküvetten dann in Abhängigkeit von den jeweils an dem Spektrometer genutzten Strahlungsquellen auswählt werden.

Unabhängig davon, ob eine einzelne Referenzküvette mit mehreren Prüfsubstanzen oder aber mehrere Referenzküvetten vorgesehen werden, müsste jedoch jeweils eine eigene Trennoptik vorgesehen werden, um die Strahlung nach Durchlaufen der Prüfsubstanzen zu verschiedenen, insbesondere für verschiedene Wellenlängenbereiche geeignete, Detektionsvorrichtungen zu lenken. Eine solche Auftrennung des Line-Locking-Kanals zur Verteilung der Strahlung, die die Referenzküvetten durchlaufen hat, auf verschiedene Detektionsvorrichtungen muss allerdings in der Regel speziell an die verschiedenen im Messstrahls zusammengefassten Wellenlängen angepasst sein, so dass bei einer Änderung der verwendeten Strahlungsquellen auch eine Anpassung der Strahlaufteilung erforderlich wird.

Alternativ dazu, die Referenzküvetten im Messstrahl bzw. einem abgezweigten Anteil des Messstrahls vorzusehen, kann der jeweilige Strahl auch zunächst in mehrere Teilstrahlen aufgeteilt werden, wobei dann in jedem Teilstrahl eine jeweilige Referenzküvette vorgesehen wird. Doch auch durch eine derartige Ausbildung wird nicht verhindert, dass bei einer Änderung der in dem Messstrahl kombinierten Wellenlängen auch eine Anpassung eines solcherart ausgebildeten Line-Locking-Moduls erforderlich würde.

Eine weitere Möglichkeit, die Wellenlängenstabilität modular genutzter Strahlungsquellen zu überwachen, besteht darin, jeweilige Line-Locking-Kanäle bereits bei der Strahlzusammenführung, also bevor die Strahlung der verschiedenen Strahlungsquellen zu einem einzelnen Messstrahl zusammengeführt wird, abzuzweigen. Dabei kann ausgenutzt werden, dass an Strahlteilern - die für die Strahlzusammenführung als Strahlkombinierer genutzt werden - oftmals auch eigentlich unerwünschte und daher in der Regel unterdrückte Reflexionen bzw. Transmissionen auftreten, die zu Verlusten führen können. Derartige, ansonsten verlorene Anteile eines jeweiligen Strahls, die im Bereich weniger Prozente liegen können, lassen sich dann als Line-Locking-Kanal nutzen, indem sie als Teilstrahl durch jeweilige Referenzküvetten hindurch zu Detektionsvorrichtungen geleitet werden.

In solchen Teilstrahlen sind dann anders als in dem Messstrahl bzw. einem abgezweigten Teil des Messstrahls nicht die Wellenlängen aller Strahlungsquellen kombiniert, so dass sie zunächst einmal aufgetrennt werden müssten. Sondern ein jeweiliger Teilstrahl kann Strahlung einer einzigen oder lediglich einiger weniger Strahlungsquellen umfassen, die nicht unbedingt optisch aufgetrennt werden müssen, sondern z.B. auch anhand von zeitlichem Multiplexing oder anhand verschiedener Prüfsubstanzen, die deutlich unterschiedlich starke Absorption aufweisen, unterschieden werden können.

Um Line-Locking-Kanäle in sinnvoller Weise bereits bei der Strahlzusammenführung abzuzweigen und jeweils geschickt Referenzküvetten mit geeigneten Prüfsubstanzen und möglicherweise für bestimmte Wellenlängen optimierten Küvettenfenstern vorzusehen, ist es wichtig, dass vorab feststeht, welche Wellenlängen vorgesehen sind und in welcher Weise, insbesondere in welcher Reihenfolge, sie zusammengeführt werden. Daher sind auch derartige bei der Strahlzusammenführung gebildete Line-Locking-Kanäle jedenfalls dann nicht leicht umzusetzen, wenn die Strahlungsquellen nach Bedarf modular auswählbar oder austauschbar sein sollen.

Es ist eine Aufgabe der Erfindung, ein Verfahren zum Sicherstellen eines Modulationsbereichs einer wellenlängenvariablen Strahlungsquelle im Rahmen der Messung einer Absorptionslinie einer Substanz, ein Verfahren zur Messung einer Absorptionslinie einer Substanz sowie ein Spektrometer zur Messung einer Absorptionslinie einer Substanz bereitzustellen, die eine geringe Komplexität aufweisen und, insbesondere im Zusammenhang mit modular verwendeten Strahlungsquellen, von denen nach Bedarf mehrere ausgewählt und gleichzeitig zur Messung mehrerer Absorptionslinien verschiedener Substanzen genutzt werden, flexibel anwendbar sind.

Die Aufgabe wird gelöst durch ein Verfahren mit den Merkmalen des Anspruchs 1, durch ein Verfahren mit den Merkmalen des Anspruchs 8 oder 9 bzw. durch ein Spektrometer mit den Merkmalen des Anspruchs 11. Bevorzugte Ausführungsformen der Erfindung ergeben sich aus den Unteransprüchen, der vorliegenden Beschreibung sowie den Zeichnungen.

Mittels der erfindungsgemäßen Verfahren und des erfindungsgemäßen Spektrometers wird jeweils der Modulationsbereich einer wellenlängenvariablen Strahlungsquelle sichergestellt. Darunter ist zu verstehen, dass sichergestellt wird, dass der tatsächliche Modulationsbereich, d.h. derjenige Wellenlängenbereich, den die von der jeweiligen Strahlungsquelle ausgesandte Strahlung tatsächlich durchläuft, mit dem vorgegebenen Modulationsbereich übereinstimmt, d.h. mit demjenigen Wellenlängenbereich, zu dessen Durchlaufen die Strahlungsquelle angesteuert wird. Es geht also darum, dass ein Abweichen von dem vorgegebenen Modulationsbereich vermieden wird. Da die jeweilige Strahlungsquelle Effekten, z.B. Alterungseffekten, unterliegen kann, die zu derartigen Abweichungen führen können, kann der Modulationsbereich insbesondere dadurch sichergestellt werden, dass eine Abweichung erkennbar gemacht wird, so dass sie gegebenenfalls kompensiert werden kann. Die Behebung der Abweichung kann dann z.B. durch Justieren der Strahlungsquelle erfolgen, etwa indem ein Arbeitspunkt und/oder eine Temperatur der Strahlungsquelle nachgeregelt wird.

Um den Modulationsbereich sicherzustellen, wird zunächst die Strahlungsquelle dazu angesteuert, Strahlung derart auszusenden, dass die Wellenlänge der Strahlung den Modulationsbereich gemäß einem zeitlichen Muster durchlaufen soll. Dabei wird die Strahlungsquelle vorteilhafterweise dazu angesteuert, die Strahlung zumindest im Wesentlichen in derselben Weise auszusenden, wie sie auch für eine herkömmliche Messung einer Absorptionslinie einer jeweiligen Substanz ausgesandt wird, also insbesondere gemäß demselben zeitlichen Muster denselben Modulationsbereich durchlaufend. Da das Durchlaufen des Modulationsbereichs bei einer herkömmlichen Messung einem Abtasten der Absorptionslinie dient, ist der Modulationsbereich dabei vorteilhafterweise derart gewählt, dass die Absorptionslinie in den Modulationsbereich fällt.

Die ausgesandte Strahlung wird anschließend mittels eines Filters gefiltert. Das Filter ist dabei insbesondere wellenlängenselektiv, so dass die Strahlung in Abhängigkeit von ihrer jeweiligen Wellenlänge das Filter zumindest im Wesentlichen vollständig passieren kann oder zumindest im Wesentlichen vollständig daran gehindert wird. Dabei weist das Filter zumindest eine Filterflanke auf. Eine solche Filterflanke stellt einen Übergang zwischen einem Durchlassbereich und einem Sperrbereich des Filters dar, wobei das Filter Strahlung mit einer Wellenlänge innerhalb eines jeweiligen Durchlassbereichs des Filters durchlässt und Strahlung mit einer Wellenlänge innerhalb eines jeweiligen Sperrbereichs des Filters sperrt. Idealerweise entspricht eine jeweilige Filterflanke einem sprunghaften Übergang zwischen einem Durchlassbereich und einem Sperrbereich des Filters. Der Übergang ist in der Regel aber graduell. Dabei kann eine Filterflanke aber sehr steil, z.B. etwa einen oder lediglich wenige Nanometer breit, sein. Die Wellenlänge einer Filterflanke kann dann z.B. als Mittelpunkt ihrer Breite oder aber als diejenige Wellenlänge, bei der die Strahlung zu gleichen Teilen durchgelassen und gesperrt wird, definiert sein. Diese Wellenlänge wird nachfolgend auch als tatsächliche Wellenlänge einer jeweiligen Filterflanke bezeichnet, da sie eine gegebene und vorbekannte physikalische Eigenschaft des Filters definiert.

Die Bezeichnung als Durchlassbereich oder spektraler Durchlassbereich ist dabei jeweils lediglich bezogen auf die Filterfunktion des Filters zu verstehen, nicht aber darauf, ob die Strahlung durch das Filter transmittiert oder auf sonstiger Weise hindurch geleitet wird. Je nach Art des Filters braucht die Strahlung das jeweilige Filter nicht zu durchlaufen, um gefiltert zu werden. Denn eine Filterung kann beispielsweise auch dadurch erfolgen, dass Strahlung an einem Filter wellenlängenabhängig reflektiert wird. In einem solchen Fall ist ein jeweiliger Durchlassbereich in Bezug auf die Reflexion definiert und bezeichnet einen Wellenlängenbereich, in dem Strahlung gerade nicht durch das Filter transmittiert wird, sondern reflektiert wird. Der Durchlassbereich entspricht bei einem solchen Filter insofern einem Reflexionsbereich des Filters. Die ausgefilterte Strahlung, d.h. Strahlung mit einer Wellenlänge in einem Sperrbereich des Filters, kann dabei an dem Filter absorbiert oder transmittiert werden. Insofern kann ein jeweiliger Sperrbereich eines solchen Filters einem jeweiligen Absorptionsbereich oder Transmissionsbereich des Filters entsprechen.

Umgekehrt kann bei einem Filter, bei dem die Filterung auf wellenlängenabhängiger Transmission beruht, ein jeweiliger Durchlassbereich einem jeweiligen Transmissionsbereich des Filters entsprechen. Strahlung mit einer Wellenlänge außerhalb des Durchlassbereichs kann an einem solchen Filter absorbiert oder reflektiert werden. Insofern kann bei einem solchen Filter ein jeweiliger Sperrbereich einem jeweiligen Absorptionsbereich oder Reflexionsbereich des Filters entsprechen.

Das Filter kann auch mehrere Durchlassbereiche und/oder mehrere Sperrbereiche aufweisen, die dann durch jeweilige Filterflanken voneinander getrennt sind, so dass das Filter mehrere Filterflanken aufweist. Dabei weist das Filter aber zumindest eine Filterflanke auf, deren tatsächliche Wellenlänge innerhalb des Modulationsbereichs liegt, zu deren Durchlaufen die Strahlungsquelle angesteuert wird. Dadurch wird vorteilhafterweise gewährleistet, dass ein Teil der von der Strahlungsquelle ausgesandten Strahlung, nämlich derjenige auf der Durchlassseite der Filterflanke, das Filter passiert und ein anderer Teil, nämlich derjenige auf der Sperrseite der Filterflanke, das Filter nicht passiert. Wenn mehrere Filterflanken innerhalb des Modulationsbereichs liegen, können auch bezüglich ihrer jeweiligen Wellenlängenbereiche zueinander disjunkte Teile von dem Filter durchgelassen bzw. gesperrt werden.

Bevorzugt liegt dabei die Absorptionslinie der zu messenden Substanz, insbesondere vollständig, innerhalb des spektralen Durchlassbereichs des Filters, so dass die Abtastung der Absorptionslinie durch das Filter nicht behindert wird. Dies stellt einen wesentlichen Unterschied zu der Verwendung von Referenzküvetten dar, die typischerweise als Prüfsubstanz die zu messende Substanz aufweisen und daher genau im Bereich der zu messenden Absorptionslinie absorbieren, also sperren, anstatt durchzulassen.

Die so gefilterte Strahlung kann anschließend detektiert werden. Dabei wird insbesondere die Intensität der gefilterten Strahlung in Bezug zu dem genannten zeitlichen Muster erfasst. Das ermöglicht es, ein Spektrum der gefilterten Strahlung zu ermitteln, das die Intensität der Strahlung in Abhängigkeit von ihrer jeweiligen Wellenlänge beschreibt. Das Spektrum kann aber insofern fehlerbehaftet sein, als zwar der Zusammenhang zwischen der erfassten Intensität und der Wellenlänge über das zeitliche Muster hergestellt wird, es aber nicht sicher ist, dass die gemäß dem zeitlichen Muster angesteuerte Strahlungsquelle zu einem jeweiligen Zeitpunkt auch tatsächlich die jeweils vorgegebene Wellenlänge ausgesandt hat.

Ob dies der Fall ist oder aber eine Abweichung vorliegt, kann nun aber anhand der Auswirkung des Filters, insbesondere der Filterflanke, auf das Spektrum festgestellt werden. Denn die Filterflanke führt bei einem Übergang zwischen einem Durchlassbereich und einem Sperrbereich zu einem entsprechenden Anstieg bzw. Abfall der erfassten Intensität im Spektrum, so dass die Filterflanke in dem Spektrum identifiziert werden kann - sofern das Spektrum die Filterflanke überhaupt aufweist. Insbesondere wenn die Filterflanke nahe dem Rand des Modulationsbereichs liegt, kann ein gedrifteter oder auf sonstige Weise verfälschter Modulationsbereich nämlich daran erkennbar sein, dass die Filterflanke im verfälschten Modulationsbereich und folglich auch im Spektrum nicht enthalten ist. Ein einfaches Kriterium zum Sicherstellen des Modulationsbereichs kann daher das Vorliegen der Filterflanke im Spektrum sein.

Somit kann es für das Sicherstellen des Modulationsbereichs ausreichen, festzustellen, ob das Spektrum die zumindest eine Filterflanke oder bei einem Filter mit mehreren Filterflanken innerhalb des Modulationsbereichs diese mehreren Filterflanken aufweist. Trifft dies zu, entspricht der tatsächlich durchlaufene Modulationsbereich zumindest innerhalb eines gewissen Toleranzbereichs dem vorgegebenen Modulationsbereich. Weist das Spektrum die Filterflanke bzw. die Filterflanken dagegen nicht auf, lässt sich daran ein von der Vorgabe abweichender Modulationsbereich erkennen.

Eine mögliche Weiterbildung des Verfahrens besteht darin, eine jeweilige Filterflanke nicht nur zu identifizieren, sondern auch ihre Lage festzustellen und mit der erwarteten Lage zu vergleichen. Insbesondere kann anhand des Spektrums eine gemessene Wellenlänge der zumindest einen im Modulationsbereich liegenden Filterflanke bestimmt werden. Da die gemessene Wellenlänge dabei anhand des Spektrums ermittelt wird, das wie erläutert fehlerbehaftet sein kann, entspricht diese gemessene Wellenlänge dann nicht zwangsläufig der tatsächlichen Wellenlänge der Filterflanke. An einer Abweichung zwischen der gemessenen und der tatsächlichen Wellenlänge der Filterflanke kann also das Vorliegen eines Fehlers erkannt werden. Daher wird die gemessene Wellenlänge der zumindest einen Filterflanke bei dieser vorteilhaften Weiterbildung des Verfahrens anschließend mit der tatsächlichen Wellenlänge der zumindest einen Filterflanke verglichen.

Stimmen dabei die gemessene und die tatsächliche Wellenlänge nicht überein, kann daraus geschlossen werden, dass auch der Modulationsbereich, den die von der Strahlungsquelle ausgesandte Strahlung durchlaufen hat, nicht mit dem Modulationsbereich übereinstimmt, zu dessen Durchlaufen die Strahlungsquelle angesteuert wurde. Wenn die gemessene Wellenlänge dagegen zumindest im Wesentlichen, z.B. innerhalb einer gewissen Toleranz, mit der tatsächlichen Wellenlänge der zumindest einen Filterflanke identisch ist, ist dadurch sichergestellt, dass der Modulationsbereich tatsächlich wie vorgegeben durchlaufen wurde.

Das Filter ist nicht auf eine bestimmte Position innerhalb des von einer jeweiligen Strahlungsquelle ausgehenden und auf eine jeweilige Detektionsvorrichtung treffenden Strahlengangs zwangsläufig festgelegt. Insbesondere kann ein jeweiliges Filter in einer der weiter oben für Referenzküvetten beschriebenen Weise angeordnet sein. So kann beispielsweise vorgesehen sein, dass von dem Messstrahl, der die zu messenden Substanzen durchlaufen soll, ein Anteil abgezweigt und durch das Filter geleitet wird. Dabei können auch mehrere Filter vorgesehen sein, etwa für verschiedene, von verschiedenen Strahlungsquellen ausgesandte Strahlung jeweils ein Filter. Es kann auch vorgesehen sein, dass der Messstrahl erst nach dem Durchlaufen der zu messenden Substanzen wieder in mehrere Teilstrahlen aufgeteilt wird und jeweilige Filter in diesen Teilstrahlen oder davon abgezweigten Anteilen vorgesehen werden. Alternativ oder zusätzlich können ferner ein oder mehrere Filter in den noch nicht zusammengeführten Strahlengängen angeordnet sein oder im Bereich des Zusammenführens der Strahlengänge.

Somit sind die vorstehend für Referenzküvetten beschriebenen verschiedenen Anordnungen grundsätzlich auch mit Filtern anstelle der Referenzküvetten umsetzbar, wobei die Filter dann ermöglichen, das erfindungsgemäße Verfahren durchzuführen. Dabei weist ein Filter gegenüber einer Referenzküvette nicht nur den Vorteil auf, weniger alterungsanfällig und wartungsaufwändig zu sein sowie besser in die Messung integriert werden zu können, ohne sie zu stören. Sondern das Filter hat zusätzlich zum Sicherstellen des korrekten Modulationsbereichs auch eine Funktion bei der Messung der Absorptionslinie und bietet dadurch einen erweiterten Nutzen, indem es zur Strahlkombination bzw. zur Strahltrennung beiträgt, wie nachfolgend noch näher erläutert wird.

Grundsätzlich kann zum Sicherstellen des Modulationsbereichs auf die beschriebene Weise ein Filter ausreichen, das genau eine Filterflanke im Modulationsbereich aufweist. Gemäß einer vorteilhaften Ausführungsform ist das Filter allerdings als Band-Pass-Filter ausgebildet, dessen Durchlassbereich durch zwei Filterflanken begrenzt wird, wobei dann festgestellt wird, ob das Spektrum beide Filterflanken aufweist. Dabei liegen vorzugsweise beide Filterflanken innerhalb des Modulationsbereichs, insbesondere die eine Filterflanke nahe dem einen Rand des Modulationsbereichs und die andere Filterflanke nahe dem anderen Rand des Modulationsbereichs. Mittels eines solchen Band-Pass-Filters kann folglich ein Teil des Modulationsbereichs sozusagen ausgeschnitten werden, nämlich derjenige Teil, der dem Durchlassbereich des Band-Pass-Filters entspricht. Dadurch wird der effektiv für die Messung nutzbare Modulationsbereich zwar verringert. Solange aber die Absorptionslinie in dem Durchlassbereich liegt, steht dies einer Messung der Absorptionslinie nicht entgegen.

Der Vorteil der Berücksichtigung zweier Filterflanken gegenüber lediglich einer Filterflanke besteht dann beispielsweise darin, dass unabhängig von der Richtung einer Drift oder sonstigen Verfälschung des Modulationsbereichs, jedenfalls eine der Filterflanken vom verfälschen Modulationsbereich bald nicht mehr abgedeckt wird, so dass das Spektrum zumindest diese Filterflanke nicht länger aufweist. Daran kann dann das Vorliegen eines verfälschten Messbereichs erkannt werden. Solange das Spektrum dagegen beide Filterflanken aufweist, kann von einem zumindest innerhalb eines gewissen Toleranzbereichs korrekten Modulationsbereich ausgegangen werden, so dass auf diese Weise der Modulationsbereich sichergestellt ist.

Ähnlich wie vorstehend für ein Filter mit zumindest einer Filterflanke beschrieben, kann über das bloße Identifizieren der Filterflanken im Spektrum hinaus auch vorgesehen sein, dass anhand des Spektrums jeweilige gemessene Wellenlängen der zwei Filterflanken bestimmt werden und dass die gemessenen Wellenlängen mit den tatsächlichen Wellenlängen der zwei Filterflanken verglichen werden.

Ein Band-Pass-Filter mit zwei Filterflanken im Modulationsbereich auf diese Weise als Referenz für eine Abweichung des tatsächlichen Modulationsbereichs von dem vorgegebenen Modulationsbereich zu nutzen, kann gegenüber einem Filter mit lediglich einer Filterflanke den Vorteil haben, dass das Maß der Abweichung zuverlässiger, nämlich z.B. durch Mittelung der beiden Abweichungen zwischen gemessener und tatsächlicher Wellenlänge der Filterflanken, bestimmt werden kann, was unter Umständen für eine Justierung der Strahlungsquelle nützlich sein kann. Ferner kann durch das Vorsehen zweier Filterflanken vermieden werden, dass das Spektrum unter Umständen gar keine Filterflanke aufweist. Denn da die Absorptionslinie vorzugsweise im Wesentlichen mittig innerhalb des Modulationsbereichs liegt, liegt eine jeweilige Filterflanke eher in einem Randbereich des Modulationsbereichs. Wenn der tatsächlich durchlaufene Modulationsbereich aber stark von dem eigentlich zu durchlaufenden Modulationsbereich abweicht, kann die Filterflanke dann von dem tatsächlichen Modulationsbereich nicht länger umfasst sein und im Spektrum somit gar nicht erscheinen. Da aber bei der Verwendung eines Band-Pass-Filters vorteilhafterweise zu beiden Seiten der Absorptionslinie eine jeweilige Filterflanke vorgesehen ist, weist das Spektrum, jedenfalls solange die Absorptionslinie noch im Modulationsbereich liegt, stets zumindest eine Filterflanke auf, die dann zur Bestimmung des Maßes der Abweichung herangezogen werden kann.

Vorzugsweise weist der Durchlassbereich dabei eine maximale spektrale Breite von etwa 0,5 cm⁻¹, vorzugsweise von etwa 1 cm⁻¹, insbesondere von etwa 3 cm⁻¹, auf. Dabei braucht der Durchlassbereich grundsätzlich nur wenig breiter als die Absorptionslinie der jeweiligen zu messenden Substanz zu sein, damit die Messung durch das Filter nicht behindert wird. Vorteilhafterweise ist der Durchlassbereich dabei nur wenig breiter als die Absorptionslinie, so dass der Durchlassbereich vollständig innerhalb des, seinerseits durch die grundsätzliche Abstimmbarkeit der Strahlungsquelle eingeschränkten, Modulationsbereichs liegt und folglich beide den Durchlassbereich begrenzenden Filterflanken für eine Prüfung auf eine Abweichung herangezogen werden können.

Erfindungsgemäß wird das Filter durch ein optisches Element, insbesondere durch einen Strahlteiler, gebildet, das zusätzlich zum Filtern auch dazu genutzt wird, zumindest zwei Strahlengänge räumlich zusammenzuführen und/oder einen Strahlengang in zumindest zwei Strahlengänge räumlich aufzuteilen. Der Vorteil eines Filters, das auch zwei Strahlengänge räumlich zusammenführt, liegt darin, dass ein derartiges optisches Element ohnehin, nämlich insbesondere für das Kombinieren von Strahlung aus verschiedenen Strahlungsquellen, vorgesehen sein kann. Gerade bei einem modular ausgebildeten Spektrometer, an dem zur gleichzeitigen Messung mehrerer Substanzen je nach zu messenden Substanzen ein jeweils unterschiedlicher Satz von Strahlungsquellen genutzt wird, können mehrere optische Elemente zum Zusammenführen der von den jeweiligen Strahlungsquellen ausgehenden Strahlengänge vorgesehen sein. Dabei kann grundsätzlich jedes dieser optischen Elemente auch als Filter im Rahmen des beschriebenen Verfahrens zum Sicherstellen des Modulationsbereichs einer jeweiligen Strahlungsquelle ausgebildet sein.

Immer wenn zwei Strahlengänge mittels eines solchen optischen Elements zusammengeführt werden, kann der Wellenlängenbereich der Strahlung zumindest eines der Strahlengänge durch das insofern als Filter wirkende optische Element modifiziert werden, so dass die jeweiligen Filterflanken sozusagen als Marker in das Wellenlängenprofil der Strahlung eingeprägt werden. Wenn die Strahlung aller Strahlungsquellen in dieser Weise, insbesondere durch jeweilige Band-Pass-Filter, beim Zusammenführen der Strahlung zu einem einzelnen Messstrahl gefiltert wird, kann der Messstrahl im Ergebnis Strahlung umfassen, die jeweils nur Wellenlängen in einem schmalen Bereich um eine jeweilige zu messende Absorptionslinie aufweist, wobei ein jeweiliger solcher Bereich, insbesondere beidseitig, von einer jeweiligen Filterflanke scharf begrenzt ist. Zu jeder zu messenden Absorptionslinie stehen somit jeweilige Filterflanken als Referenz zur Verfügung, durch die sichergestellt werden kann, dass der jeweilige Modulationsbereich korrekt durchlaufen wird.

Grundsätzlich braucht die Filterung zum Einprägen jeweiliger Filterflanken als Marker in das jeweilige Spektrum aber nicht oder jedenfalls nicht ausschließlich bei der Kombination mehrerer Strahlengänge zu einem einzelnen Messstrahl zu erfolgen. Sondern es kann erfindungsgemäß alternativ oder zusätzlich vorgesehen sein, dass die Strahlung beim Aufteilen eines solcherart gebildeten Messstrahls in mehrere zu verschiedenen Detektionsvorrichtungen gelenkte Teilstrahlen gefiltert wird. Insbesondere, wenn eine solche Aufteilung des Messstrahls ohnehin vorgesehen ist, ist es nützlich, als Filter geeignete Strahlteiler für die Aufteilung zu nutzen. Die zu
einer jeweiligen Detektionsvorrichtung gelenkte Strahlung weist dann Wellenlängenbereiche auf, die von jeweiligen Filterflanken begrenzt werden, deren gemessene Wellenlänge dann jeweils mit ihrer tatsächlichen Wellenlänge verglichen werden kann.

Gemäß einer bevorzugten Ausführungsform umfasst das Filter ein Volumen-Bragg-Gitter, an dem die Strahlung zum Filtern reflektiert wird. Ein Volumen-Bragg-Gitter weist eine Modulation des Brechungsindexes im Substrat auf, die insbesondere holographisch, z.B. in photosensitivem Glas als Substrat, hervorgerufen werden kann. Die spezielle Ausbildung des Volumen-Bragg-Gitters hat zur Folge, dass am Volumen-Bragg-Gitter nur dann Strahlung reflektiert wird, wenn die sogenannte Bragg-Bedingung erfüllt ist, was stark von der jeweiligen Wellenlänge der Strahlung und von deren jeweiligem Einfallswinkel abhängt. Für ein bestimmtes Volumen-Bragg-Gitter wird daher unter einem bestimmten Einfallswinkel Strahlung lediglich in einem schmalen und vergleichsweise scharf begrenzten Wellenlängenbereich reflektiert. Bezüglich der Reflexion stellt das Volumen-Bragg-Gitter insofern also ein schmalbandiges Band-Pass-Filter dar.

Strahlung, die hinsichtlich ihrer Wellenlänge und/oder ihres Einfallswinkels die Bragg-Bedingung nicht erfüllt, kann dagegen transmittiert werden. Daher kann das Volumen-Bragg-Gitter dazu genutzt werden, zwei Strahlengänge räumlich zusammenzuführen, nämlich indem zu einem von dem Volumen-Bragg-Gitter transmittierten Strahl ein zweiter Strahl unter Erfüllung der Bragg-Bedingung an dem Volumen-Bragg-Gitter eingespiegelt wird, so dass sich die beiden Strahlen überlagern. Sofern der reflektierte Strahl Wellenlängen außerhalb des Durchlassbereichs des Volumen-Bragg-Gitters aufweist, wird er dabei zwangsläufig gefiltert. Durch Verwendung eines Volumen-Bragg-Gitters, dessen Durchlassbereich (oder zumindest eine Filterflanke) innerhalb des Modulationsbereichs liegt, der von der Strahlung des reflektierten Strahls durchlaufen wird, kann dem Wellenlängenprofil des reflektierten Strahls somit zumindest eine als Referenz nutzbare Filterflanke eingeprägt werden.

In ähnlicher Weise kann ein Volumen-Bragg-Gitter auch zum Aufteilen eines Strahls in zwei Teilstrahlen genutzt werden. Dazu wird ein Strahl durch ein Volumen-Bragg-Gitter gelenkt, wobei derjenige Anteil des Strahls reflektiert wird, der die Bragg-Bedingung erfüllt, dessen Wellenlänge insofern also im Durchlassbereich des Volumen-Bragg-Gitters liegt. Der andere Teil kann durch das Volumen-Bragg-Gitter transmittiert werden. Grundsätzlich ist es auf diese Weise auch möglich, zwei zur Messung naher beieinander liegender Absorptionslinien genutzte Strahlen mittels eines Volumen-Bragg-Gitters (oder auch eines anderen optischen Elements, das geeignete Filtereigenschaften aufweist) mit einer zwischen den beiden Absorptionslinien liegenden, möglichst steilen Filterflanke aufzuteilen und dabei zugleich den jeweiligen Wellenlängenbereich beider Strahlen durch die Filterflanke zu begrenzen, so dass die möglichst scharfe Begrenzung als Referenz für die Sicherstellung des Modulationsbereichs der jeweiligen Strahlungsquelle genutzt werden kann.

Gemäß einer vorteilhaften Ausführungsform umfasst das Verfahren ferner, dass ein Warnsignal ausgegeben wird und/oder die Strahlungsquelle justiert wird, bis das Spektrum die zumindest eine Filterflanke bzw. beide Filterflanken aufweist, wenn festgestellt wird, dass das Spektrum die zumindest eine Filterflanke bzw. die zwei Filterflanken des als Band-Pass-Filter ausgebildeten Filters nicht aufweist. Das Justieren der Strahlungsquelle kann beispielsweise umfassen, dass ein Arbeitspunkt und/oder eine Temperatur der Strahlungsquelle nachgeregelt wird.

Wie weiter oben bereits erwähnt, kann das Feststellen, ob das Spektrum eine jeweilige Filterflanke aufweist, zusätzlich umfassen, dass festgestellt wird, ob das Spektrum die jeweilige Filterflanke auch bei der zu erwartenden Wellenlänge aufweist, nämlich bei der tatsächlichen Wellenlänge der jeweiligen Filterflanke. Dazu kann das Feststellen umfassen, dass anhand des Spektrums eine gemessene Wellenlänge der jeweiligen Filterflanke bestimmt wird und die gemessene Wellenlänge der jeweiligen Filterflanke mit der tatsächlichen Wellenlänge der jeweiligen Filterflanke verglichen wird. Bei einem als Band-Pass-Filter ausgebildeten Filter kann das insbesondere umfassen, dass anhand des Spektrums jeweilige gemessene Wellenlängen der zwei den Durchlassbereich des Filters begrenzenden Filterflanken bestimmt werden und die gemessenen Wellenlängen der zwei Filterflanken mit den tatsächlichen Wellenlängen der zwei Filterflanken verglichen werden.

Ein solches Vergleichen einer gemessenen Wellenlänge mit einer tatsächlichen Wellenlänge einer jeweiligen Filterflanke kann sich darauf beschränken, festzustellen, ob die gemessene und die tatsächliche Wellenlänge der jeweiligen Filterflanke, insbesondere zumindest innerhalb eines gewissen Toleranzbereichs, übereinstimmen oder ob eine Abweichung vorliegt. Insbesondere kann eine gegebenenfalls vorliegende Abweichung dann bei der Ergebnisauswertung berücksichtigt werden.

Gemäß einer vorteilhaften Ausführungsform ist vorgesehen, dass bei einer Abweichung der gemessenen Wellenlänge einer jeweiligen Filterflanke von der tatsächlichen Wellenlänge der jeweiligen Filterflanke die Strahlungsquelle justiert wird, bis die gemessene Wellenlänge der jeweiligen Filterflanke mit der tatsächlichen Wellenlänge der jeweiligen Filterflanke zumindest im Wesentlichen übereinstimmt. Das Justieren der Strahlungsquelle kann wiederum insbesondere umfassen, dass ein Arbeitspunkt und/oder eine Temperatur der Strahlungsquelle nachgeregelt wird.

Beispielsweise kann die Wellenlänge der wellenlängenvariablen Strahlungsquelle durch einen Steuerstrom oder eine Steuerspannung verstellbar sein, so dass die Strahlungsquelle dazu angesteuert werden kann, Strahlung mit den Modulationsbereich gemäß einem zeitlichen Muster durchlaufender Wellenlänge auszusenden, indem der Steuerstrom bzw. die Steuerspannung in entsprechender Weise das zeitliche Muster vorgibt. Der genannte Arbeitspunkt kann dann insbesondere durch einen bestimmten Strom oder eine bestimmte Spannung definiert sein, mit dem/der die Strahlungsquelle zum Aussenden von Strahlung einer bestimmten Grundwellenlänge angesteuert wird. Durch Alterungseffekte oder sonstige Effekte, insbesondere Drift, kann sich der Strom bzw. die Spannung aber verändern, der/die zum Aussenden der Grundwellenlänge an die Strahlungsquelle anzulegen ist. Anhand der festgestellten Abweichung kann die fehlerhaft gewordene Zuordnung zwischen Strom bzw. Spannung und Wellenlänge dann aber nachgeregelt werden.

Besonders vorteilhaft ist dabei, dass sich sowohl das Feststellen einer Abweichung als auch das Justieren der Strahlungsquelle grundsätzlich automatisieren lassen. Zudem kann das Justieren auch sozusagen live im Messkanal erfolgen, indem wiederholt Strahlung gemäß dem zeitlichen Muster ausgesandt und ein jeweiliges Spektrum aufgezeichnet wird und dabei die Strahlungsquelle solange nachgeregelt wird, bis die Filterflanke im Spektrum an derjenigen Stelle erscheint, die ihrer tatsächlichen Wellenlänge entspricht. Durch ein solches Vorgehen kann die Justierung einfach und zuverlässig durchgeführt werden.

Insbesondere wenn keine automatische Justierung der jeweiligen Strahlungsquelle erfolgt, kann es ferner vorteilhaft sein, wenn bei einer Abweichung der gemessenen Wellenlänge einer jeweiligen Filterflanke von der tatsächlichen Wellenlänge der jeweiligen Filterflanke ein Warnsignal ausgegeben wird.

Das Warnsignal kann beispielsweise optisch oder akustisch sein und von dem Spektrometer am Ort der Messung ausgesandt werden. Es kann aber auch über geeignete Kommunikationsmittel entfernt ausgegeben werden. Zudem kann eine Warnung auch in das Messergebnis integriert werden, indem beispielsweise zusammen mit einem ausgegebenen gemessenen Wert, z.B. einer Konzentration eines zu messenden Gases, darauf hingewiesen wird, dass dieser Wert wahrscheinlich fehlerbehaftet ist. In Reaktion auf ein jeweiliges Warnsignal kann dann eine Justierung der Strahlungsquelle vorgenommen werden.

Erfindungsgemäß sind die vorstehend beschriebenen Verfahren zum Sicherstellen eines Modulationsbereichs einer wellenlängenvariablen Strahlungsquelle im Rahmen der Messung einer Absorptionslinie einer Substanz in ein Verfahren zur Messung der Absorptionslinie der Substanz integriert. Das ist möglich, da auch zur Messung einer Absorptionslinie einer Substanz insbesondere vorgesehen ist, dass eine Strahlungsquelle dazu angesteuert wird, Strahlung derart auszusenden, dass die Wellenlänge der Strahlung einen Modulationsbereich gemäß einem zeitlichen Muster durchläuft, und dass ein Spektrum der Strahlung ermittelt wird, indem die Intensität der Strahlung in Bezug zu dem zeitlichen Muster erfasst wird. Das zusätzliche vorherige Filtern der Strahlung steht der Messung der Absorptionslinie dabei nicht entgegen, zumal die Absorptionslinie im Durchlassbereich des Filters liegt. Es kann also zum Messen der Absorptionslinie dasselbe Spektrum herangezogen werden wie für das Überwachen der jeweiligen Strahlungsquelle auf mögliche Abweichungen.

Anhand desselben Spektrums der gefilterten Strahlung wird dann einerseits festgestellt, ob das Spektrum eine jeweilige Filterflanke aufweist, und vorzugsweise gegebenenfalls auch eine gemessene Wellenlänge der jeweiligen Filterflanke des Filters bestimmt, um sie mit der tatsächlichen Wellenlänge der jeweiligen Filterflanke zu vergleichen, und andererseits die Absorptionslinie der Substanz bestimmt, wobei letzteres auf grundsätzlich herkömmliche Weise erfolgen kann. Dabei erfolgt das Bestimmen der Absorptionslinie jedenfalls dann, vorzugsweise nur dann, wenn festgestellt wird, dass das Spektrum die jeweilige Filterflanke aufweist, insbesondere wenn die gemessene Wellenlänge mit der tatsächlichen Wellenlänge zumindest im Wesentlichen übereinstimmt. So kann sichergestellt werden, dass die bestimmte Absorptionslinie und eine gegebenenfalls daraus ermittelte Konzentration der jeweiligen Substanz nicht durch einen Fehler der Strahlungsquelle verfälscht ist. Falls dagegen eine Abweichung festgestellt wird, kann diese vorteilhafterweise berücksichtigt werden.

Gemäß einer Weiterbildung dieses Verfahrens kann ferner vorgesehen sein, dass aus der Absorptionslinie schließlich eine Konzentration der jeweiligen Substanz bestimmt wird. Insbesondere wenn das zeitliche Muster, gemäß dem die Strahlungsquelle zum Aussenden von Strahlung angesteuert wird, entsprechend ausgebildet ist, kann das nach der Methode der Wellenlängen-Modulations-Spektroskopie, d.h. nach den dafür bekannten Auswerteverfahren erfolgen. Beispielsweise umfasst eine solche Auswertung dann das Bestimmen eines aus dem Spektrum abgeleiteten Signalverlaufs, der beispielsweise zumindest im Wesentlichen eine Ableitung des Spektrums sein kann, z.B. ein sogenanntes 2f-Signal. Aus einem solchen Signalverlauf lassen sich dann charakteristische Größen, wie z.B. eine Fläche oder eine Breite, bestimmen, aus denen die Konzentration abgeleitet werden kann. Alternativ zur Wellenlängen-Modulations-Spektroskopie können aber beispielsweise auch Methoden der direkten Absorptionsspektroskopie mit entsprechenden Auswerteverfahren zur Anwendung kommen. Bei derartigen Ausführungsformen des erfindungsgemäßen Verfahrens steht dann nicht unbedingt die Messung der Absorptionslinie als solche im Vordergrund, sondern letztlich die Bestimmung der Konzentration der jeweiligen Substanz.

Die genannten Verfahren zur Messung einer Absorptionslinie bzw. der Konzentration einer Substanz können insbesondere mittels eines Spektrometers ausgeführt werden. Dazu kann das Spektrometer insbesondere eine Strahlungsquelle zum Aussenden von Strahlung, deren Wellenlänge einen Modulationsbereich gemäß einem zeitlichen Muster durchläuft, ein Filter zum Filtern der Strahlung, eine Detektionsvorrichtung zum Erfassen der Intensität der gefilterten Strahlung und eine Steuer- und Auswerteeinrichtung zum Ansteuern der Strahlungsquelle und zum Ermitteln eines Spektrums aus der erfassten Intensität der gefilterten Strahlung in Bezug zu dem zeitlichen Muster umfassen. Das Spektrometer kann auch mehrere, insbesondere modular ausgebildete und wahlweise in unterschiedlicher Kombination verwendbare Strahlungsquellen umfassen bzw. dazu ausgebildet sein, dass derartige Strahlungsquellen an dem Spektrometer wahlweise anordenbar sind. Die vorstehend beschriebenen Verfahren können dann parallel auf die jeweilige Strahlung der verschiedenen Strahlungsquellen bezogen entsprechend ausgeführt werden, so dass mehrere Absorptionslinien verschiedener Substanzen gleichzeitig gemessen werden können und dabei jeweils auch der Modulationsbereich der jeweiligen Strahlungsquelle sichergestellt wird.

Die Erfindung wird nachfolgend lediglich beispielhaft unter Bezugnahme auf die Figuren weiter erläutert.
- Fig. 1: zeigt ein Spektrometer zur Ausführung eines Verfahrens gemäß der Erfindung in schematischer Darstellung.
- Fig. 2: zeigt in schematischer Darstellung zwei exemplarische Spektren, die bei der Messung einer Absorptionslinie ermittelt werden können, wenn die Strahlung dabei in erfindungsgemäßer Weise gefiltert bzw. nicht gefiltert wird.

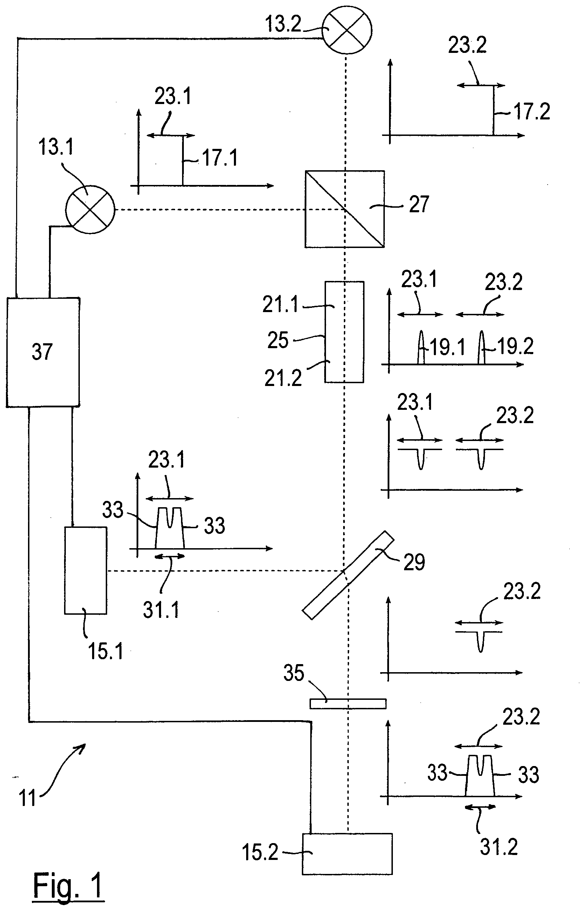

In Fig. 1 ist schematisch ein Spektrometer 11 dargestellt, das eine erste Strahlungsquelle 13.1 und eine zweite Strahlungsquelle 13.2 sowie eine erste Detektionsvorrichtung 15.1 und eine zweite Detektionsvorrichtung 15.2 umfasst. Die Anzahl der Strahlungsquellen 13 sowie der Detektionsvorrichtungen 15 ist dabei grundsätzlich variabel. Insbesondere brauchen nicht zwangsläufig ebenso viele Detektionsvorrichtungen 15 vorgesehen zu werden wie Strahlungsquellen 13, da mittels einer jeweiligen Detektionsvorrichtung 15 auch die Strahlung mehrerer verschiedener Strahlungsquellen 13 erfasst und, etwa anhand von Multiplexing, auch unterschieden werden kann.

Die beiden Strahlungsquellen 13.1, 13.2 sind dazu ansteuerbar, Strahlung zu erzeugen und auszusenden, die zumindest im Wesentlichen jeweils monochromatisch ist, also zumindest im Wesentlichen lediglich eine Wellenlänge aufweist oder deren jeweiliges Emissionsspektrum 17.1, 17.2 eine lediglich schmale Linienbreite von schmaler als 0,001 cm⁻¹, vorzugsweise schmaler als 0,003 cm⁻¹, aufweist. Allerdings sind die Strahlungsquellen 13.1, 13.2 insofern wellenlängenvariabel, als die jeweils ausgesandte Wellenlänge veränderbar ist. Bei den wellenlängenvariablen Strahlungsquellen 13.1, 13.2 handelt es sich insbesondere um abstimmbare Diodenlaser.

Im Rahmen der Messung jeweiliger Absorptionslinien 19.1, 19.2 zu untersuchender Substanzen 21.1, 21.2 werden die Strahlungsquellen 13.1, 13.2 dazu angesteuert, Strahlung derart auszusenden, dass ihre Wellenlänge einen jeweiligen Modulationsbereich 23.1, 23.2 gemäß einem zeitlichen Muster durchläuft. Dabei wird der jeweilige Modulationsbereich 23.1, 23.2 jedenfalls in dem gezeigten Beispiel kontinuierlich von einem Ende zum anderen und wieder zurück durchlaufen. Um dies zu illustrieren, ist neben die jeweils als unterbrochene Linie dargestellte ausgesandte Strahlung jeweils ein Spektrum dargestellt, in dem schematisch die Intensität der Strahlung (Ordinate) gegen die Wellenlänge (Abszisse) aufgetragen ist. Das schmale Emissionsspektrum 17.1, 17.2 der jeweiligen Strahlungsquelle 13.1, 13.2 erscheint darin als vertikale Linie. Der darüber dargestellte Doppelpfeil gibt den jeweiligen Modulationsbereich 23.1, 23.2 an, der von der Linie durchlaufen wird. Die Position der Linie innerhalb des Modulationsbereichs 23.1, 23.2 ist daher nur eine Momentaufnahme und nicht konstant.

Die dargestellten Spektren sind rein schematisch und dienen lediglich der Veranschaulichung, sie sind also insbesondere nicht maßstabsgetreu. Daher können die Modulationsbereiche 23.1, 23.2 der verschiedenen Strahlungsquellen 13.1, 13.2 auch anders als dargestellt unterschiedlich breit sein. Insbesondere unterscheiden sich die Modulationsbereiche 23.1, 23.2 jedenfalls hinsichtlich ihrer jeweiligen Lage, die so gewählt ist, dass ein jeweiliger Modulationsbereich 23.1, 23.2 eine jeweilige Absorptionslinie 19.1, 19.2 der zu messenden Substanzen 21.1, 21.2 abdeckt.

Die Substanzen 21.1, 21.2, deren Absorptionslinien 19.1, 19.2 gemessen werden sollen, befinden sich in einer Messküvette 25, durch die eine Messstrecke definiert wird, die zur Messung der Absorption von einem Messstrahl durchlaufen wird. In dem Messstrahl ist die Strahlung der beiden Strahlungsquellen 13.1, 13.2 kombiniert. Zur Bildung des Messstrahls werden die Strahlung der ersten Strahlungsquelle 13.1 und die Strahlung der zweiten Strahlungsquelle 13.2 mittels eines als Strahlkombinierer genutzten Strahlteilers 27 räumlich zusammengeführt, insbesondere zumindest teilweise überlagert. Bei dem Strahlteiler 27 kann es sich beispielsweise um einen Polwürfel handeln, der es bei entsprechender Polarisation der jeweiligen Strahlungen ermöglicht, auch Wellenlängen nahe beieinanderliegender Modulationsbereiche 23.1, 23.2 zur Messung nahe beieinanderliegender Absorptionslinien 19.1, 19.2 mit hoher Effizienz zusammenzuführen.

Anstelle einer extraktiven Messung mit einer Messküvette 25, in der die zu messenden Substanzen 21 aufgenommen sind, kann grundsätzlich auch eine andersartige Messstrecke vorgesehen sein. Insbesondere ist auch denkbar, dass die Messung in situ erfolgt. Beispielsweise kann sich die Messstecke bei einer sogenannten Cross-Duct-Messung durch einen Kanal erstecken, durch den die, insbesondere gasförmigen, Substanzen 21 geleitet werden.

Neben der Messküvette 25 sind in Fig. 1 die Absorptionslinien 19.1, 19.2 der zwei zu messenden Substanzen 21.1, 21.2 zusammen mit den Modulationsbereichen 23.1, 23.2 der beiden Strahlungsquellen 13.1, 13.2 schematisch dargestellt.

Grundsätzlich können aber auch mehr als lediglich zwei Substanzen 21.1, 21.2 in der Messküvette 25 enthalten und deren jeweilige Absorptionslinien 19 zu messen sein. Dazu können dann entsprechend mehr Strahlungsquellen 13 an dem Spektrometer 11 vorgesehen werden. Außerdem ist es grundsätzlich auch möglich, mehrere Absorptionslinien 19 mittels einer einzelnen Strahlungsquelle 13 zu messen, etwa indem sich der Modulationsbereich 23 dieser Strahlungsquelle 13 über mehrere Absorptionslinien 19 erstreckt.

Infolge der Absorption durch die Substanzen 21.1, 21.2 ist die Intensität der Strahlung nach Durchlaufen der Messküvette 25 im Bereich einer jeweiligen Absorptionslinie 19.1, 19.2 verringert. Der Messstrahl weist dann ein Spektrum auf, wie es schematisch rechts unterhalb der Messküvette 25 dargestellt ist. Dieses Spektrum umfasst Strahlung im Bereich der beiden Modulationsbereiche 23.1, 23.2, wobei die Absorption im Bereich einer jeweiligen Absorptionslinie 19.1, 19.2 im Spektrum als Intensitätseinbruch zu erkennen ist.

Der Messstrahl wird anschließend in zwei Teilstrahlen räumlich aufgeteilt, wobei zugleich einer der Teilstrahlen gefiltert wird. Dies erfolgt mittels eines Volumen-Bragg-Gitters 29, das dazu ausgebildet ist, Strahlung, die in dem gezeigten Winkel auf das Volumen-Bragg-Gitter 29 trifft, nur dann zu reflektieren, wenn ihre Wellenlänge in einem Durchlassbereich 31.1 dieser Reflexion liegt, wobei der Durchlassbereich 31.1 von dem Modulationsbereich 23.1 der ersten Strahlungsquelle 13.1 umfasst wird und seinerseits die Absorptionslinie 13.1 der einen Substanz 21.1 umfasst. Aus der reflektierten Strahlung werden durch das Volumen-Bragg-Gitter 29 also die Wellenlängen außerhalb des genannten Durchlassbereichs 31.1 herausgefiltert. Insofern fungiert das Volumen-Bragg-Gitter 29 hinsichtlich der Reflexion als Band-Pass-Filter mit dem genannten Durchlassbereich 31.1.

Mittels der Detektionsvorrichtung 15.1, auf welche die reflektierte und dabei gefilterte Strahlung trifft, kann die Strahlung dann erfasst und ein Spektrum ermittelt werden, das schematisch neben der Detektionsvorrichtung 15.1 dargestellt ist. In diesem Spektrum lassen sich dann Filterflanken 33 identifizieren, welche jeweils einen Übergang zwischen dem Durchlassbereich 31.1 und einem daran angrenzenden jeweiligen Sperrbereich des Volumen-Bragg-Gitters 29 markieren.

Die jeweilige tatsächliche Wellenlänge dieser Filterflanken 33 ist durch das Volumen-Bragg-Gitter 29 fest vorgegeben. Aus dem Spektrum kann die Wellenlänge einer jeweiligen Filterflanke 33 allerdings nur über den Zusammenhang zwischen dem Zeitpunkt des Erfassens und der zu diesem Zeitpunkt jedenfalls vermeintlich ausgesandten Wellenlänge der jeweiligen Strahlungsquelle 13.1, also anhand des genannten zeitlichen Musters, bestimmt werden. Allerdings kann die zu einem jeweiligen Zeitpunkt von einer jeweiligen Strahlungsquelle 13.1, 13.2 tatsächlich ausgesandte Wellenlänge von der Wellenlänge abweichen, zu deren Aussenden die Strahlungsquelle 13.1, 13.2 angesteuert wurde. Eine solche Abweichung kann dann daran erkannt werden, dass dann auch die gemessene Wellenlänge einer jeweiligen Filterflanke 33, die anhand des Spektrums bestimmt wird, von der tatsächlichen Wellenlänge der Filterflanke 33 abweicht.

Durch die Filterung der Strahlung werden dem gemessenen Spektrum einer jeweiligen Absorptionslinie 19 die Filterflanken 33 sozusagen als Referenzmarkierungen eingeprägt, so dass anhand desselben Spektrums, das zur Messung der Absorptionslinie benutzt wird, durch einfachen Vergleich der gemessenen Wellenlänge einer jeweiligen Filterflanke 33 mit der tatsächlichen Wellenlänge der Filterflanke 33 zugleich auch überprüft werden kann, ob bei der Strahlungsquelle 13 eine Abweichung vorliegt, die zu einer Verzerrung oder Verschiebung des Modulationsbereichs 23 geführt hat.

In ähnlicher Weise kann auch der zweite Teilstrahl, der durch die Strahlteilung am Volumen-Bragg-Gitter 29 entsteht und an dem Volumen-Bragg-Gitter 29 nicht reflektiert, sondern transmittiert wird, gefiltert werden, um sicherzustellen, dass auch der Modulationsbereich 23.2 der zweiten Strahlungsquelle 13.2 keine Abweichung aufweist. Dazu kann ein schmalbandiges Band-Pass-Filter 35 vorgesehen werden, welches von dem zweiten Teilstrahl durchlaufen wird und dessen Durchlassbereich 31.2 einerseits von dem Modulationsbereich 23.2 der zweiten Strahlungsquellen 13.2 umfasst wird und andererseits die Absorptionslinie 19.2 der weiteren zu messenden Substanz 21.2 umfasst. Auf diese Weise weist auch das mittels der zweiten Detektionsvorrichtung 15.2 ermittelte Spektrum zwei den Durchlassbereich 31.2 begrenzende Filterflanken 33 auf, deren jeweilige gemessene Wellenlänge anhand des Spektrums bestimmt und mit der jeweiligen tatsächlichen Wellenlänge der Filterflanken 33 verglichen werden kann.

Zum Ansteuern der Strahlungsquellen 13.1, 13.2 sowie zur Auswertung der mittels der Detektionsvorrichtungen 15.1, 15.2 erfassten Daten, insbesondere zur konkreten Ermittlung jeweiliger Spektren, zum Bestimmen von Wellenlängen jeweiliger Filterflanken anhand der Spektren und/oder zum Bestimmen der Konzentrationen jeweiliger Substanzen anhand der Absorptionslinien in den Spektren, weist das Spektrometer zudem eine Steuer- und Auswerteeinrichtung 37 auf. In dieser Steuer- und Auswerteeinrichtung 37 kann insbesondere auch der Vergleich der gemessenen Wellenlängen der Filterflanken 33 mit deren tatsächlichen Wellenlängen erfolgen. Sollte eine Abweichung vorliegen, kann die Steuer- und Auswerteeinrichtung die Ansteuerung der Strahlungsquellen 13.1, 13.2 anschließend vorzugsweise derart anpassen, dass die Abweichung gerade kompensiert wird.

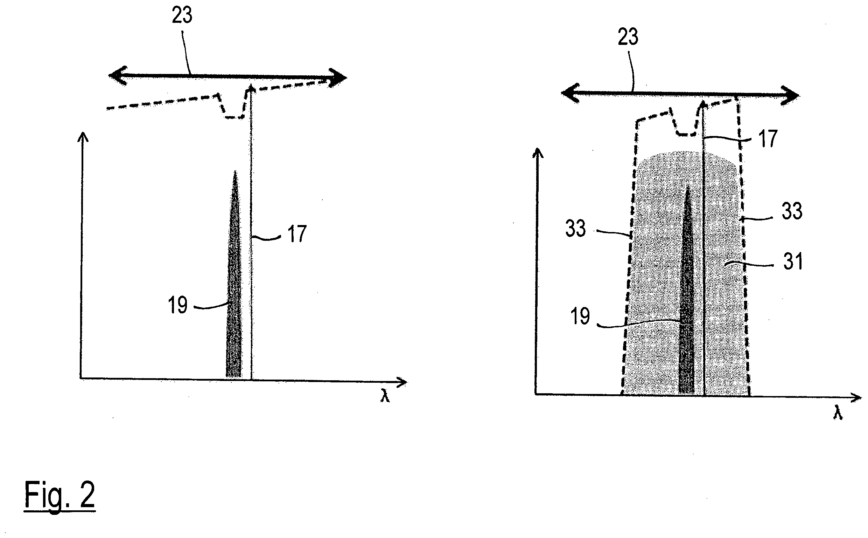

In Fig. 2 sind zur Verdeutlichung der Auswirkung der erfindungsgemäßen Filterung der Strahlung zwei Spektren gezeigt, wie sie bei der Messung einer Absorptionslinie 19 einer jeweiligen zu untersuchenden Substanz 21 ermittelt werden können. Die beiden Spektren sind jeweils als unterbrochene Linie dargestellt. Zusätzlich sind jeweils die Absorptionslinie 19 sowie (als Doppelpfeil) der Modulationsbereich 23, den die Wellenlänge der ausgesandten Strahlung durchläuft, dargestellt. Zudem ist das Emissionsspektrum 17 der jeweiligen Strahlungsquelle 13 als vertikale Linie gezeigt, die eigentlich keine feste Position aufweist, sondern den Modulationsbereich 23 über dessen gesamte Erstreckung, gegebenenfalls mehrfach, durchläuft.

Da nur Strahlung mit Wellenlängen innerhalb des Modulationsbereichs 23 erzeugt wird, erstreckt sich auch das jeweilige Spektrum höchstens über dessen Ausdehnung. Das Spektrum weist dabei aufgrund der Absorption der Strahlung durch die jeweilige Substanz 21 im Bereich der Absorptionslinie 19 eine entsprechende Vertiefung auf. Ansonsten weist das Spektrum jeweils eine zumindest im Wesentlichen konstante Intensität auf. Grundsätzlich kann die Intensität aber auch, etwa aufgrund von Dispersionseffekten, zumindest geringfügig wellenlängenabhängig variieren. Insbesondere kann die Intensität, wie in Fig. 2 dargestellt, mit zunehmender Wellenlänge bzw. abnehmender Wellenzahl zumindest im Wesentlichen kontinuierlich zunehmen.

Bei dem in Fig. 2 rechts dargestellten Spektrum wurde die Strahlung anders als bei dem links dargestellten Spektrum auf erfindungsgemäße Weise gefiltert. Der Durchlassbereich 31 des dazu verwendetes Filters ist in dem rechten Spektrum zusätzlich gezeigt. Insbesondere ist zu erkennen, dass der Durchlassbereich 31 vollständig innerhalb des Modulationsbereichs 23 der jeweiligen Strahlungsquelle 13 liegt und seinerseits die Absorptionslinie 19 der jeweiligen Substanz 21 vollständig umfasst. Für eine zuverlässige Abtastung der Absorptionslinie 19 ist zudem die Linienbreite 17 der Strahlungsquelle 13 schmaler als die Absorptionslinie 19.

Wie ein Vergleich des in Fig. 2 rechts dargestellten Spektrums mit dem links dargestellten Spektrum zeigt, hat die erfindungsgemäße Filterung der Strahlung zur Folge, dass das Spektrum außerhalb des Durchlassbereichs 31 des Filters keine Intensität aufweist. Die den Durchlassbereich 31 flankierenden Filterflanken 33 lassen sich im rechten Spektrum am steilen Abfall der gemessenen Intensität identifizieren und können daher als Referenzen dafür herangezogen werden, ob die anhand des Spektrum ermittelten Wellenlängen und sonstigen Größen fehlerbehaftet sind. Dazu reicht es, die gemessenen Wellenlängen der Filterflanken 33 mit deren bekannten tatsächlichen Wellenlängen zu vergleichen. Anhand dieses Vergleichs kann dann sichergestellt werden, dass der Modulationsbereich 23, den die Strahlung tatsächlich durchlaufen hat, mit dem vorgegebenen Modulationsbereich 23 übereinstimmt, zu dessen Durchlaufen die Strahlungsquelle 13 angesteuert wurde.

### Bezuqszeichen

- 11: Spektrometer
- 13: Strahlungsquelle
- 15: Detektionsvorrichtung
- 17: Emissionsspektrum
- 19: Absorptionslinie
- 21: zu messende Substanz
- 23: Modulationsbereich
- 25: Messküvette
- 27: Strahlteiler
- 29: Volumen-Bragg-Gitter
- 31: Durchlassbereich
- 33: Filterflanke
- 35: Band-Pass-Filter
- 37: Steuer- und Auswerteeinrichtung

## Patentansprüche

1. Verfahren zum Sicherstellen eines Modulationsbereichs (23) einer wellenlängenvariablen Strahlungsquelle (13) im Rahmen der Messung einer Absorptionslinie (19) einer Substanz (21),
wobei das Verfahren umfasst,
dass die Strahlungsquelle (13) dazu angesteuert wird, Strahlung derart auszusenden, dass die Wellenlänge der Strahlung den Modulationsbereich (23) gemäß einem zeitlichen Muster durchläuft,
dass die Strahlung mittels eines Filters (29, 35) gefiltert wird, in dessen Durchlassbereich (31) die Absorptionslinie (19) liegt und das zumindest eine Filterflanke (33) aufweist, deren tatsächliche Wellenlänge innerhalb des Modulationsbereichs (23) liegt,
dass ein Spektrum der gefilterten Strahlung ermittelt wird, indem die Intensität der gefilterten Strahlung in Bezug zu dem zeitlichen Muster erfasst wird, und dass festgestellt wird, ob das Spektrum die zumindest eine Filterflanke (33) aufweist,
**dadurch gekennzeichnet,**
**dass** das Filter (29) durch ein optisches Element, insbesondere durch einen Strahlteiler, gebildet wird, das zusätzlich zum Filtern auch dazu genutzt wird, die Strahlung der Strahlungsquelle (13) mit der Strahlung zumindest einer weiteren Strahlungsquelle zu einem einzelnen Messstrahl räumlich zusammenzuführen und/oder den Messstrahl in zumindest zwei Strahlengänge räumlich aufzuteilen.

2. Verfahren nach Anspruch 1,
wobei das Filter als Band-Pass-Filter (29, 35) ausgebildet ist, dessen Durchlassbereich (31) durch zwei Filterflanken (33) begrenzt wird, und wobei festgestellt wird, ob das Spektrum beide Filterflanken (33) aufweist.

3. Verfahren nach Anspruch 2,
wobei der Durchlassbereich (31) eine maximale spektrale Breite von etwa 0,5 cm⁻¹, vorzugsweise von etwa 1 cm⁻¹, insbesondere von etwa 3 cm⁻¹, aufweist.

4. Verfahren nach zumindest einem der vorstehenden Ansprüche,
wobei das Filter ein Volumen-Bragg-Gitter (29) umfasst, an dem die Strahlung zum Filtern reflektiert wird.

5. Verfahren nach zumindest einem der vorstehenden Ansprüche,
wobei ein Warnsignal ausgegeben wird und/oder die Strahlungsquelle (13) justiert wird, bis das Spektrum die zumindest eine Filterflanke (33) aufweist, wenn festgestellt wird, dass das Spektrum die zumindest eine Filterflanke (33) nicht aufweist,
vorzugsweise: wobei das Filter als Band-Pass-Filter (29, 35) ausgebildet ist, dessen Durchlassbereich (31) durch zwei Filterflanken (33) begrenzt wird, und ein Warnsignal ausgegeben wird und/oder die Strahlungsquelle (13) justiert wird, bis das Spektrum beide Filterflanken (33) aufweist, wenn festgestellt wird, dass das Spektrum nicht beide Filterflanken (33) aufweist,.

6. Verfahren nach zumindest einem der vorstehenden Ansprüche,
wobei das Feststellen, ob das Spektrum die zumindest eine Filterflanke (33) aufweist, zusätzlich umfasst,
dass anhand des Spektrums eine gemessene Wellenlänge der zumindest einen Filterflanke (33) bestimmt wird und die gemessene Wellenlänge der zumindest einen Filterflanke (33) mit der tatsächlichen Wellenlänge der zumindest einen Filterflanke (33) verglichen wird,
vorzugsweise:
wobei das Filter als Band-Pass-Filter (29, 35) ausgebildet ist, dessen Durchlassbereich (31) durch zwei Filterflanken (33) begrenzt wird, und das Feststellen, ob das Spektrum die zumindest eine Filterflanke (33) aufweist, zusätzlich umfasst,
dass anhand des Spektrums jeweilige gemessene Wellenlängen der zwei Filterflanken (33) bestimmt werden und die gemessenen Wellenlängen der zwei Filterflanken (33) mit den tatsächlichen Wellenlängen der zwei Filterflanken (33) verglichen werden.

7. Verfahren nach Anspruch 6,
wobei bei einer Abweichung der gemessenen Wellenlänge der zumindest einen Filterflanke (33) von der tatsächlichen Wellenlänge der zumindest einen Filterflanke (33) ein Warnsignal ausgegeben wird und/oder die Strahlungsquelle (13) justiert wird, bis die gemessene Wellenlänge der zumindest einen Filterflanke (33) mit der tatsächlichen Wellenlänge der zumindest einen Filterflanke (33) zumindest im Wesentlichen übereinstimmt, vorzugsweise:
wobei das Filter als Band-Pass-Filter (29, 35) ausgebildet ist, dessen Durchlassbereich (31) durch zwei Filterflanken (33) begrenzt wird, und bei einer Abweichung der gemessen Wellenlängen der zwei Filterflanken (33) von den tatsächlichen Wellenlängen der zwei Filterflanken (33) ein Warnsignal ausgegeben wird und/oder die Strahlungsquelle (13) justiert wird, bis die gemessenen Wellenlängen der zwei Filterflanken (33) mit den tatsächlichen Wellenlängen der zwei Filterflanken (33) zumindest im Wesentlichen übereinstimmen.

8. Verfahren zur Messung einer Absorptionslinie (19) einer Substanz (21),
wobei das Verfahren die Durchführung eines Verfahrens zum Sicherstellen eines Modulationsbereichs (23) einer wellenlängenvariablen Strahlungsquelle (13) nach zumindest einem der vorstehenden Ansprüche umfasst, wobei anhand des Spektrums der gefilterten Strahlung zusätzlich die Absorptionslinie (19) der Substanz (21) bestimmt wird, wenn festgestellt wird, dass das Spektrum die zumindest eine Filterflanke (33) aufweist, insbesondere wenn eine anhand des Spektrum bestimmte gemessene Wellenlänge der zumindest einen Filterflanke (33) mit der tatsächlichen Wellenlänge der zumindest einen Filterflanke (33) zumindest im Wesentlichen übereinstimmt.

9. Verfahren zur Messung einer Absorptionslinie (19) einer Substanz (21),
wobei das Verfahren die Durchführung eines Verfahrens zum Sicherstellen eines Modulationsbereichs (23) einer wellenlängenvariablen Strahlungsquelle (13) nach zumindest einem der Ansprüche 1 bis 8 umfasst, wobei das Filter als Band-Pass-Filter (29, 35) ausgebildet ist, dessen Durchlassbereich (31) durch zwei Filterflanken (33) begrenzt wird,
und wobei anhand des Spektrums der gefilterten Strahlung zusätzlich die Absorptionslinie (19) der Substanz (21) bestimmt wird, wenn festgestellt wird, dass das Spektrum beide Filterflanken (33) aufweist, insbesondere wenn jeweilige anhand des Spektrum bestimmte gemessene Wellenlängen der zwei Filterflanken (33) mit den tatsächlichen Wellenlängen der zwei Filterflanken (33) zumindest im Wesentlichen übereinstimmen.

10. Verfahren nach Anspruch 8 oder 9,
wobei aus der Absorptionslinie (19) eine Konzentration der Substanz (21), insbesondere nach der Methode der Wellenlängen-Modulations-Spektroskopie oder der direkten Absorptionsspektroskopie, bestimmt wird.

11. Spektrometer (11) zur Messung einer Absorptionslinie (19) einer Substanz (21),
mit einer Strahlungsquelle (13) zum Aussenden von Strahlung, deren Wellenlänge einen Modulationsbereich (23) gemäß einem zeitlichen Muster durchläuft, einem Filter (29, 35) zum Filtern der Strahlung, einer Detektionsvorrichtung (15) zum Erfassen der Intensität der gefilterten Strahlung und einer Steuer- und Auswerteeinrichtung (37) zum Ansteuern der Strahlungsquelle (13) und zum Ermitteln eines Spektrums aus der erfassten Intensität der gefilterten Strahlung in Bezug zu dem zeitlichen Muster, wobei das Spektrometer (11) zur Ausführung eines Verfahrens nach zumindest einem der Ansprüche 8 bis 10 ausgebildet ist.

## Claims

1. A method of securing a modulation range (23) of a wavelength-variable radiation source (13) as part of the measurement of an absorption line (19) of a substance (21),
wherein the method comprises
the radiation source (13) being controlled to transmit radiation such that the wavelength of the radiation runs through the modulation range (23) in accordance with a time pattern;
the radiation being filtered by means of a filter (29, 35) in whose pass band (31) the absorption line (19) is disposed and which has at least one filter flank (33) whose actual wavelength is within the modulation range (23); a spectrum of the filtered radiation being determined in that the intensity of the filtered radiation is detected with respect to the time pattern;
and a determination being made whether the spectrum has the at least one filter flank (33),
**characterized in that**
the filter (29) is formed by an optical element, in particular by a beam splitter, which is also used, in addition to filtering, to spatially combine the radiation of the radiation source (13) with the radiation of at least one further radiation source to form a single measurement beam and/or to spatially split the measurement beam into at least two optical paths.

2. A method in accordance with claim 1,
wherein the filter is configured as a bandpass filter (29, 35) whose pass band (31) is bounded by two filter flanks (33);
and wherein a determination is made whether the spectrum has both filter flanks (33).

3. A method in accordance with claim 2,
wherein the pass band (31) has a maximum spectral width of approximately 0.5 cm⁻¹, preferably of approximately 1 cm⁻¹, in particular of approximately 3 cm⁻¹.

4. A method in accordance with at least one of the preceding claims,
wherein the filter comprises a volume Bragg grating (29) at which the radiation is reflected for filtering.

5. A method in accordance with at least one of the preceding claims,
wherein a warning signal is output and/or the radiation source (13) is adjusted until the spectrum has the at least one filter flank (33) when it is determined that the spectrum does not have the at least one filter flank (33), preferably:
wherein the filter is configured as a bandpass filter (29, 35) whose pass band (31) is bounded by two filter flanks (33) and a warning signal is output and/or the radiation source (13) is adjusted until the spectrum has both filter flanks (33) when it is determined that the spectrum does not have both filter flanks (33).

6. A method in accordance with at least one of the preceding claims,
wherein the determination whether the spectrum has the at least one filter flank (33) additionally comprises
a measured wavelength of the at least one filter flank (33) being determined with reference to the spectrum and the measured wavelength of the at least one filter flank (33) being compared with the actual wavelength of the at least one filter flank (33),
preferably:
wherein the filter is configured as a bandpass filter (29, 35) whose pass band (31) is bounded by two filter flanks (33) and the determination whether the spectrum has the at least one filter flank (33) additionally comprises respective measured wavelengths of the two filter flanks (33) being determined with reference to the spectrum and the measured wavelengths of the two filter flanks (33) being compared with the actual wavelengths of the two filter flanks (33).

7. A method in accordance with claim 6,
wherein, on a deviation of the measured wavelength of the at least one filter flank (33) from the actual wavelength of the at least one filter flank (33), a warning signal is output and/or the radiation source (13) is adjusted until the measured wavelength of the at least one filter flank (33) at least substantially coincides with the actual wavelength of the at least one filter flank (33),
preferably:
wherein the filter is configured as a bandpass filter (29, 35) whose pass band (31) is bounded by two filter flanks (33); and, on a deviation of the measured wavelengths of the two filter flanks (33) from the actual wavelengths of the two filter flanks (33), a warning signal is output and/or the radiation source (13) is adjusted until the measured wavelengths of the two filter flanks (33) at least substantially coincide with the actual wavelengths of the two filter flanks (33).

8. A method of measuring an absorption line (19) of a substance (21),
wherein the method comprises the carrying out of a method of securing a modulation range (23) of a wavelength-variable radiation source (13) in accordance with at least one of the preceding claims;
wherein the absorption line (19) of the substance (21) is additionally determined with reference to the spectrum of the filtered radiation when it is determined that the spectrum has the at least one filter flank (33), in particular when a measured wavelength of the at least one filter flank (33) determined with reference to the spectrum at least substantially coincides with the actual wavelength of the at least one filter flank (33).

9. A method of measuring an absorption line (19) of a substance (21),
wherein the method comprises the carrying out of a method of securing a modulation range (23) of a wavelength-variable radiation source (13) in accordance with at least one of the claims 1 to 8,
wherein the filter is configured as a bandpass filter (29, 35) whose pass band (31) is bounded by two filter flanks (33);
and wherein the absorption line (19) of the substance (21) is additionally determined with reference to the spectrum of the filtered radiation when it is determined that the spectrum has both filter flanks (33), in particular when respective measured wavelengths of the two filter flanks (33) determined with reference to the spectrum at least substantially coincide with the actual wavelengths of the two filter flanks (33).

10. A method in accordance with claim 8 or claim 9,
wherein a concentration of the substance (21) is determined from the absorption line (19), in particular in accordance with the method of wavelength modulation spectroscopy or of direct absorption spectroscopy.

11. A spectrometer (11) for measuring an absorption line (19) of a substance (21),
comprising a radiation source (13) for transmitting radiation whose wavelength runs through a modulation range (23) in accordance with a time pattern; a filter (29, 35) for filtering the radiation; a detection apparatus (15) for detecting the intensity of the filtered radiation; and a control and evaluation device (37) for controlling the radiation source (13) and for determining a spectrum from the detected intensity of the filtered radiation with respect to the time pattern,
wherein the spectrometer (11) is configured to carry out a method in accordance with at least one of the claims 8 to 10.

## Revendications

1. Procédé pour assurer une plage de modulation (23) d'une source de rayonnement (13) à longueur d'onde variable dans le cadre de la mesure d'une ligne d'absorption (19) d'une substance (21),
le procédé comprenant les étapes consistant à
piloter la source de rayonnement (13) pour émettre un rayonnement de telle sorte que la longueur d'onde du rayonnement traverse la plage de modulation (23) selon un schéma temporel,
filtrer le rayonnement au moyen d'un filtre (29, 35) dans la bande passante (31) duquel se trouve la ligne d'absorption (19) et qui présente au moins un flanc de filtrage (33) dont la longueur d'onde réelle se situe à l'intérieur de la plage de modulation (23),
déterminer un spectre du rayonnement filtré en détectant l'intensité du rayonnement filtré par rapport au schéma temporel, et constater si le spectre présente au moins un flanc de filtrage (33),
**caractérisé en ce que**
le filtre (29) est constitué par un élément optique, en particulier par un séparateur de faisceau, qui est utilisé, outre pour le filtrage, également pour réunir spatialement le rayonnement de la source de rayonnement (13) avec le rayonnement d'au moins une autre source de rayonnement pour donner un seul faisceau de mesure et/ou pour diviser spatialement le faisceau de mesure en au moins deux trajets de rayonnement.

2. Procédé selon la revendication 1,
dans lequel
le filtre est réalisé sous forme de filtre passe-bande (29, 35) dont la bande passante (31) est limitée par deux flancs de filtrage (33), et
il est constaté si le spectre présente les deux flancs de filtrage (33).

3. Procédé selon la revendication 2,
dans lequel
la bande passante (31) présente une largeur spectrale maximale d'environ 0,5 cm⁻¹, de préférence d'environ 1 cm⁻¹, en particulier d'environ 3 cm⁻¹.

4. Procédé selon l'une au moins des revendications précédentes,
dans lequel
le filtre comprend un réseau de Bragg en volume (29) sur lequel le rayonnement est réfléchi pour le filtrage.

5. Procédé selon l'une au moins des revendications précédentes,
dans lequel
un signal d'avertissement est émis et/ou la source de rayonnement (13) est ajustée jusqu'à ce que le spectre présente ledit au moins un flanc de filtrage (33) lorsqu'il est constaté que le spectre ne présente pas ledit au moins un flanc de filtrage (33),
de préférence
le filtre est réalisé sous forme de filtre passe-bande (29, 35) dont la bande passante (31) est limitée par deux flancs de filtrage (33), et
un signal d'avertissement est émis et/ou la source de rayonnement (13) est ajustée jusqu'à ce que le spectre présente les deux flancs de filtrage (33) lorsqu'il est constaté que le spectre ne présente pas les deux flancs de filtrage (33).

6. Procédé selon l'une au moins des revendications précédentes,
dans lequel
le fait de constater si le spectre présente ledit au moins un flanc de filtrage (33) inclut en supplément :
de déterminer une longueur d'onde mesurée dudit au moins un flanc de filtrage (33) sur la base du spectre et de comparer la longueur d'onde mesurée dudit au moins un flanc de filtrage (33) à la longueur d'onde réelle dudit au moins un flanc de filtrage (33),
de préférence
le filtre est réalisé sous forme de filtre passe-bande (29, 35) dont la bande passante (31) est limitée par deux flancs de filtrage (33), et
le fait de constater si le spectre présente ledit au moins un flanc de filtrage (33) inclut en supplément
de déterminer des longueurs d'onde mesurées respectives des deux flancs de filtrage (33) sur la base du spectre, et de comparer les longueurs d'onde mesurées des deux flancs de filtrage (33) aux longueurs d'onde réelles des deux flancs de filtrage (33).

7. Procédé selon la revendication 6,
dans lequel
lors d'un écart de la longueur d'onde mesurée dudit au moins un flanc de filtrage (33) par rapport à la longueur d'onde réelle dudit au moins un flanc de filtrage (33), un signal d'avertissement est émis et/ou la source de rayonnement (13) est ajustée jusqu'à ce que la longueur d'onde mesurée dudit au moins un flanc de filtrage (33) coïncide au moins sensiblement avec la longueur d'onde réelle dudit au moins un flanc de filtrage (33),
de préférence
le filtre est réalisé sous forme de filtre passe-bande (29, 35) dont la bande passante (31) est limitée par deux flancs de filtrage (33), et
lors d'un écart des longueurs d'onde mesurées des deux flancs de filtrage (33) par rapport aux longueurs d'onde réelles desdits deux flancs de filtrage (33), un signal d'avertissement est émis et/ou la source de rayonnement (13) est ajustée jusqu'à ce que les longueurs d'onde mesurées des deux flancs de filtrage (33) coïncident au moins sensiblement avec les longueurs d'onde réelles des deux flancs de filtrage (33).

8. Procédé pour mesurer une ligne d'absorption (19) d'une substance (21), le procédé comprenant la mise en oeuvre d'un procédé pour assurer une plage de modulation (23) d'une source de rayonnement (13) à longueur d'onde variable, selon l'une au moins des revendications précédentes,
dans lequel
la ligne d'absorption (19) de la substance (21) est déterminée en supplément sur la base du spectre du rayonnement filtré, lorsqu'il est constaté que le spectre présente ledit au moins un flanc de filtrage (33), en particulier lorsqu'une longueur d'onde mesurée, déterminée sur la base du spectre, dudit au moins un flanc de filtrage (33) coïncide au moins sensiblement avec la longueur d'onde réelle dudit au moins un flanc de filtrage (33).

9. Procédé pour mesurer une ligne d'absorption (19) d'une substance (21), le procédé comprenant la mise en oeuvre d'un procédé pour assurer une plage de modulation (23) d'une source de rayonnement (13) à longueur d'onde variable, selon l'une au moins des revendications 1 à 8,
dans lequel
le filtre est réalisé sous forme de filtre passe-bande (29, 35) dont la bande passante (31) est limitée par deux flancs de filtrage (33), et
la ligne d'absorption (19) de la substance (21) est déterminée en supplément sur la base du spectre du rayonnement filtré, lorsqu'il est constaté que le spectre présente les deux flancs de filtrage (33), en particulier lorsque des longueurs d'onde mesurées respectives, déterminées sur la base du spectre, des deux flancs de filtrage (33) coïncident au moins sensiblement avec les longueurs d'onde réelles des deux flancs de filtrage (33).

10. Procédé selon la revendication 8 ou 9,
dans lequel
à partir de la ligne d'absorption (19), une concentration de la substance (21) est déterminée en particulier selon la méthode de la spectroscopie par modulation de longueur d'onde ou de la spectroscopie d'absorption directe.

11. Spectromètre (11) pour mesurer une ligne d'absorption (19) d'une substance (21),
comportant
une source de rayonnement (13) pour émettre un rayonnement dont la longueur d'onde traverse une plage de modulation (23) selon un schéma temporel, un filtre (29, 35) pour filtrer le rayonnement, un dispositif de détection (15) pour détecter l'intensité du rayonnement filtré, et un moyen de commande et d'évaluation (37) pour piloter la source de rayonnement (13) et pour déterminer un spectre à partir de l'intensité détectée du rayonnement filtré par rapport au schéma temporel,
le spectromètre (11) étant réalisé pour mettre en oeuvre un procédé selon l'une au moins des revendications 8 à 10.
